# EUROPEAN PATENT APPLICATION

(11) **EP 0 861 870 A1**
(43) Date of publication of application: **02.09.1998**
(21) Application number: 98500023.1
(22) Date of filing: 29.01.1998
(51) Int. Cl.: C08K 9/12, C08L 23/02, C08J 5/18

(54) **Long duration effect antidripping films**

(30) Priority: 27.02.1997 ES 9700429
(71) Applicant: REPSOL QUIMICA S.A., E-28046 Madrid (ES)
(72) Inventor: Espi Guzman, Enrique, 28015 Madrid (ES); Jorge Tapia, Graciano, 28030 Mardrid (ES)
(74) Representative: Del Santo Abril, Natividad

(57) **Abstract**

The present invention relates to special films made of plyolefin polymers or copolymers having a long duration antidripping effect and used for various applications, although applied mainly to greenhouse and cultivation tunnel covers, characteristic in that they contain a nonionic surfactant agent which provides antidripping properties to the film, which has previously been absorbed in a micronized and microporous mineral load and thus retains the surfactant agent and acts as a titration element for said agent, substantially increasing the film's antidripping effect, even throughout its service life, a feature not possible according to the state of the art.

The film may be a standard or a thermic film, either single or multilayered, fabricated by coextrusion. In this case, at least the external layer facing inwards into the greenhouse, where condensation of the water vapor takes place, must be fabricated with the material according to the invention.

## Description

The present invention relates to improvements in polyolefin films used mainly as greenhouse and tunnel cultivation covers designed to make them more efficient and better adapted to the requirements of the plants being protected. The films may also be applied to other purposes, mainly involving packing and wrapping operations.

Given the high level of moisture normally present in greenhouses and cultivation tunnels, water vapor condensation on the inner side of the plastic cover is inevitable. The hydrophobic nature of the polyolefins normally used as the base material for cover films causes the condensation to acquire the form of spherical drops, producing a doubly adverse effect. On the one hand, when the drops reach a given size, they fall on the plants in the form of permanent rain, giving rise to a series of problems deriving from pathogenic germs which proliferate in said environments, such as Botritys cinerea. This phenomenon is experienced by farmers around the world, involving greenhouse cover films with water condensing surfaces on which the water forms a continuous layer, namely the so-called 'antidripping' or 'antimisting' films, terms which are literally translated to all languages, have been developed.

On the other hand, as shown in Example No. 1 of this specification, the spherical drops reflect impinging sunlight and reduce light transmission by up to 25%. Condensation occurs mainly in cold weather, in the first morning hours or in cold winter days, precisely when light is scarcer, making the problem even more serious. This vitally important phenomenon can be quantified only by means of appropriate scientific instruments, and so hardly any attention has been paid to it by the farmer.

Considerable resources have been assigned to the development of long duration effect polyolefin antidripping films for greenhouse covers, although no conclusive results have yet been managed.

The only way to avoid this problem is to achieve condensation in the form of a film, at least the inner side of the greenhouse cover being hydrophilic, i.e. the condensed water wets said inner side. The water thus condensed may be drained to the edge of the greenhouse cover, preventing the fall of drops on the plants. Furthermore, as shown in Example No. 1, light transmission is not only reduced, as in the case of condensation in the form of spherical drops, but actually increases slightly in respect to the dry film.

Water condensation forming a film on the inner side of the greenhouse or tunnel is solved by means of three different systems, according to the state of the art, although they all fail to provide a final solution in regard to duration of the antidripping effect as required by the application. The following is a summary of the state of the art on the subject.
- Incorporating a series of surfactant agents to the polyolefins, normally comprised in the family of polyalcohol fatty esters with free or oxyacetylene 'alcohol' groups. Some of the hydrogens in the alkylic chain may be replaced by fluorine. These hydrophilic products migrate to the surface to modify the film's surface tension, allowing condensation to occur in the form of a continuous layer. This solution, traditionally the one used most frequently, presents a serious problem in that the antidripping effect has a limited duration in view that the condensed water washes away the fine surfactant agent layer. Therefore, this system manages to achieve a hydrophilic effect lasting, in the best of circumstances, only half the useful life of the film. Furthermore, fluorinated surfactant agents are inconvenient in that they produce hydrofluoric acid upon being incinerated, a procedure increasingly used as a solution for the energy recovery disposal of plastic residues in greenhouses.
- Using a laminated film obtained through any of the known systems, such as coextrusion, bonding with adhesives, etc., so that the internally oriented layer of material in the greenhouse is a hydrophilic and insoluble polymer - e.g. ethylene polyvinyl alcohol. This system presents a drawback in that it is very expensive and furthermore provides certain properties to the cover film deriving from the hydrophilic polymer which are seldom appropriate for this application, particularly in regard to the mechanical and age resisting properties.
- The third and last system used consists in covering the inner side of the film with a normally aqueous SiO₂ or Al₂O₃ colloidal solution, to which surfactant agent and complex linking agents are optionally incorporated on the polyolefin's hydrophobic surface. This system, in addition to being expensive also, is inconvenient in that the covering lasts for only a short period of time, thus having to be repeated periodically, with the resulting increase of both material and hand labor costs.

What is required from flexible plastic greenhouse and cultivation tunnel covers is that they provide antidripping or antimisting properties, namely that the inevitable condensation of the water forms a continuous layer instead of spherical drops, and this can be achieved through any of the previously described systems according to the state of the art. A further requirement is that this property is able to last as much as the cover itself, with the cover obviously maintaining all of its initial properties throughout its useful life cycle; thus far this has proved impossible with the so-called long duration covers with a life span of two or more years. It is also important to prevent damage to other properties caused by the antidripping effect, such as mechanical and age-resisting properties, recycling function in an environment friendly manner, etc. Lastly, all this must be achieved within a cost structure allowing for industrial level applications. The antidripping or antimisting solution according to the present invention, as described in this specification, provides a reasonably good solution to the previously defined requirements which has heretofore proved impossible according to the state of the art.

The transparent and hydrophilic films of the present invention are characteristic in their use of polymers or copolymers as the raw material - e.g. polyethylene, ethylene copolymers and vinyl acetate, ethylene copolymers and butilacrylate, ethylene copolymers and alphaolefins, among others, or mixtures thereof in any proportion, known as conventional or high pressure polyethylene (LDPE), EVA copolymer, EBA copolymer, low density (LLDPE) and high density (HDPE) linear polyethylene, etc. The quality of these materials must be such that films with a thickness of 50 to 200 microns can be produced by the process known as blown tubular extrusion.

To this raw material is incorporated - by mixing in its melted state via any of the known means in the state of the art, including Bambury-type internal mixers, double spindle continuous mixers, mixing rollers, etc. - a premixture formed by non-ionic surfactant agents previously absorbed in a micronized and microporous mineral load. Types of product, concentrations and premixture formation are described hereunder.

In a solids mixer fitted with a heating device, preferably a high speed, Henschel-type model, the surfactant agents are mixed with a microporous mineral load at a temperature above the melting point of the surfactant agent, allowing for proper adsorption. As an alternative method, the surfactant agents may be dissolved in an adequate solvent such as chloroform, methanol, etc.; the porous mineral load is then soaked up with this solution. Heating is then provided in order to remove the solvent. The premixture thus obtained, formed by the microporous mineral load containing the absorbed surfactant agents, is an easily flowing powder that is subsequently mixed with the polymer in its molten stae, as explained above.

The final polyolefin compound containing the antidripping additive preabsorbed in the mineral load or premixture can be fabricated by direct mixing in its molten state, as previously discussed, or by previously producing a concentrate formed by the polyolefin and said premixture, although at a concentration several times greater than the one foreseen, the fabrication of the final compound being subsequently completed by mixing, in a second step, the remaining melted polyolefin with the concentrate, according to a technique very frequently used in the plastics industry. The greenhouse cover sheet or film is fabricated from this compound through any of the known film manufacturing methods, particularly blown tubular extrusion.

The micronized and microporous mineral products according to the present invention absorb the surfactant agents during the previously described fabrication process; they then act as dosing elements in the film, thereby extending their permanence in the film and consequently the duration of the antidripping property.

The surfactant agents used in the present invention must be of a non-ionic type pertaining to the chemical species generically defined as polyalcohol fatty acid esters, maintaining one or several 'alcohol' non-sterified or oxialkylenated functional groups, and may replace one or several hydrogens in the alkydic chain by halogens. Representative examples are sorbitol stearate (mono, di and triester), glycerol stearate and distearate, oxiethylenated ethylene glycol palmitate, sorbitol fluorinated monoestearate, etc. One single type or a mixture of several of the above may be used, depending on factors such as operational temperature foreseen, cost, duration of the antidripping effect, etc.

The micronized and microporous mineral loads according to the present invention must have an average particle size of approximately 1 to 10 microns, a specific surface of approximately 2 to 500 m²/g, and a pore volume measured by heptane adsorption of approximately 0.2 to 5 cm³/g. A porosity below this recommended range would fail to provide the absorbing power necessary for retaining the surfactant agent for a long period of time; by contrast, a higher porosity would strongly absorb the surfactant agent, thus preventing or reducing the dosage of said surfactant agent in sufficient amount to provide the antidripping property. Among these inorganic microporous products are amorphous silica, diatomaceous earth, kaolins, various types of natural silicates, zeolite, hydrotalcite, alumina, sepiolite, etc.

The concentration of the surfactant agents in the final compound or in the greenhouse cover film must be between 0.2% and 8%, preferably between 0.5% and 6%. A concentration under 0.2% would fail to achieve a lasting antidripping effect, and a concentration above 8% would produce an unnecessarily high surfactant agent migration which would furthermore reduce the mechanical properties of the film.

Concerning the concentration of the micronized mineral load, this depends on the previously discussed load porosity parameters, the nature of the load proper, the expected duration of the antidripping effect, the thickness and the type of film (either standard or thermic, as discussed further on), etc.; however, a recommended ratio is approximately 0.2 to 3 times the surfactant agent. A load/surfactant agent ratio under 0.2 would fail to allow a good adsorption, and a ratio above 3 would result in an adsorption so high as to prevent migration of the surfactant agent to the surface of the film, thereby failing to provide the antidripping properties.

A variation of the above manufacturing method, which includes a previous adsorption process of the surfactant agent by the microporous mineral load, consists in making a melted mixture - using the same plastics mixing equipment mentioned above - of the polyolefin with the microporous mineral load and the surfactant agent, on condition that all the components are added simultaneously. In this case, the surfactant agent melts first, assuming it is solid at ambient temperature, since anyhow it has a melting point far lower than that of the polyolefin. Before the polyolefin melts and mixes with the mineral load, which would annul the latter's adsorption power, the mineral load absorbs the surfactant agent and forms a premixture which is then immediately added to the polyolefin, as in the first procedure, save that in this case the process is performed in one single step. This same system may be applied by using the concentrate technique, i.e. by preparing a highly concentrated molten mixture in the long duration antidripping agent package. This concentrate is then diluted by adding polyolefin in order to produce the final compound, as in the previous procedure. The results obtained from this procedure in regard to duration of the antidripping effect are similar to those of the previous adsorption procedure, in a separate process, as may be seen in Example No. 2.

Examples No. 3 and 4 reveal the importance of the surfactant agent being absorbed in the mineral load in order to increase the duration of the film's antidripping effect by applying any of the above procedures, os other procedures, that provides the same adsorption phenomenon, thus confirming the principal claim of the present specification.

The microporous loads used as surfactant agent absorbents according to the present invention may be similar in nature to those used in patent ES-439.227, to G. Jorge Tapia, 18 October 1976, or subsequent patents, used in this case as absorbents of medium and long infrared radiation to fabricate thermic opaque films at this radiation level, a property which improves the greenhouse effect. Thus, an opaque mineral load may be used at an infrared radiation and a concentration such as to allow a good thermal effect - e.g. using diatomaceous earth, natural silicates, kaolin or silica at 5% concentration, as claimed in the above patent. The mineral load may also be selected with an adequate microporosity that will enable absorption of a surfactant agent and prove long duration antidripping properties according to the present invention. In this case, medium or low porosity are recommended, according to the previously discussed range, with a load/surfactant agent ratio equal to or greater than 1. Example No. 4 shows the difference in duration of the antidripping effect between a thermic reference film, according to the state of the art, and a thermic film with the same composition although fabricated according to the present invention.

The characteristics required from a long duration effect antidripping film have been defined thus far as applied to both standard and thermic films according to the present invention. However, a polyolefin film used in greenhouse covers or for packing and wrapping purposes must have other specific properties which are achieved through adequate selection of the base polyolefin and the additive package, such as antioxidizing agents, UV light stabilizers, pigments, antistatic agents, etc., all of which are known in the state of the art and may nonetheless complement the formulation of the films claimed in the present invention.

The long duration antidripping compositions of the present invention, either standard or thermic, allow single layer or multilayer films to be fabricated by blown tubular extrusion or coextrusion. When the single layer of a film or all the layers of a multilayer film are made of the same long duration antidripping compound, there is a tendency for the dust to accumulate on the external side, and this obviously reduces light transmission into the greenhouse. However, field tests according to Example No. 5 reveal that light transmission through these dusty long duration antidripping films with condensed water, obviously in the form of a continuous film, is greater than that of a non-antidripping film which, although providing less dust accumulation, however presents condensations in the form of spherical drops.

In order to reduce dust accumulation and improve light transmission in long duration antidripping films, multilayer films according to the present invention may be fabricated by coextrusion, a system that is well known in the state of the art, in a manner that the external layer oriented inwards of the greenhouse, on which condensation takes place, is made of a long duration antidripping compound according to the present invention, and the external layer facing skywards is made of a compound free of surfactant agents or other additives with a tendency to retain dust. The intermediate layers, as many as needed or allowed by the technique, may be selected by following other criteria, independent of the antidripping property in question. Example No. 6 shows that, according to the present invention, a film with a thickness of no more than 50 microns, namely the hydrophilic layer of a 150 or 200 micron multilayer film, would provide antidripping properties of a duration similar to that of a single layer 180 micron film, sufficient, in both cases, for this antidripping effect to last throughout the service life of the greenhouse cover. To achieve this, as described in said example, the micron film incorporates an antidripping package containing an adequate microporous mineral load and surfactant agent.

It was hard to extrapolate these accelerated laboratory results, as disclosed in Examples 2 to 6, to an actual application to greenhouses. Therefore, outdoor antidripping effect duration tests were also conducted in micro-greenhouses, as described in Example No. 7. This example shows that the duration of the antidripping effect in standard and thermic films of the present invention is 2 to 3 times longer than that of the state of the art reference films. It also reveals that the duration of some of the films of the present invention exceeds two farming cycles (> 18 months), which approximately coincides with the service life of this type of film in weather conditions similar to those prevailing in southeastern Spain, namely with a solar radiation in the order of 148 Kcal/cm² per year.

Up to this point, this specification has dealt with the antidripping films of the present invention only in regard to greenhouse and cultivation tunnel cover applications, this being the most important use and the one that demands a longer antidripping effect duration. However, this type of long duration antidripping film according to the present invention may also be used for packing, wrapping and other purposes requiring a substantially long antidripping effect duration.

Experiments are discussed hereunder which confirm the efficacy and long duration of the antidripping or antimisting effect of polyolefin films applied mainly to greenhouse and cultivation tunnel covers according to the present invention.

### Example No. 1

In a double spindle extrusion machine, two compounds were prepared according to the following formulation, the compounds being subsequently used to fabricate 180 micron films by a blown tubular extrusion process:

A) 94.9% low density polyethylene, 1% diatomaceous earth, 3% sorbitol monostearate, and 1.1% other antioxidizing additives an UV stabilizers. The surfactant agent was previously mixed with the mineral load, as described in this specification, in order to enable absorption of the agent in the load. This is an antidripping film according to the present invention.

R) The same formulation as above, save for the removal of the surfactant agent. This was a standard non-antidripping film used as a reference film.

Both films were placed over a water bath at 50°C for 5 minutes, allowing the water to condense as in the case of a greenhouse cover. As expected, the condensation formed a continuous layer over hydrophilic film A, fabricated according to the present invention, and spheric drops over reference film R. With the water thus condensed, transmission of the spectrum coinciding with the solar radiation was measured by means of an integrating dial spectrophotometer. The results revealed that film A provided 86% transmission versus only 61% - 25% less - for the reference R film.

This example reflects the importance of the antidripping effect in greenhouse cover films in regard to light transmission, in addition to other advantages deriving from the removal of the rain of condensed water falling over the plants. It is therefore most important for the antidripping effect to last throughout the film's service life.

### Example No. 2

In order to demonstrate the duration of the antidripping effect in films of the present invention versus antidripping films according to the state of the art, the following series of films with a 180 micron thickness were fabricated:

A SERIES. Comprises 9 samples based on low density polyethylene, each sample containing a 1% mineral load according to the characteristics defined in this specification. Each 3-sample subgroup contains each of the following mineral loads:
amorphous silica, diatomaceous earth and kaolin. Each of the samples further incorporates 3% of a surfactant agent, as defined in the present specification. Each sample in each 3-sample subgroup contains the same mineral load but a different surfactant agent, consisting in sorbitol monoestearate, mono + distearate glycerol and 2/3 sorbitol monostearate + 1/3 oxiethylenated ethylene glycol. All the samples contain 1.1% of other antioxidizing additives and UV stabilizers. The fabrication method of this series calls for the obvious previous adsorption of the surfactant agent in the mineral load, as discussed above.

B SERIES. Comprises the same number of samples and has the same composition as the A SERIES. The series differ only in the fabrication method. This series was fabricated using the direct composition method, namely adding all the components in one single step, as previously discussed.

R SERIES. The composition and fabrication method of this series of 3 reference samples corresponds to that of one 3-sample subgroup of the B series, in which the mineral load was removed. Therefore, each sample contains one of the three surfactant agents mentioned above. These reference samples represent antidripping films according to the state of the art.

The accelerated test designed to assess the duration of the antidripping effect involves a closed chamber (micro-greenhouse) containing water at a constant temperature of 50°C which provides a water vapor saturated atmosphere. The cover of the chamber is formed with windows used for inserting each of the film samples to be tested. The difference between the temperatures inside and outside the micro-greenhouse provides for abundant condensation to be formed on the inner side of the films. The 50°C temperature is higher than the normal temperature inside a conventional greenhouse, and therefore the surfactant agent removal and washing process was accelerated in order to shorten the time needed for estimating the duration of the antidripping effect. The limit of the antidripping effect duration was estimated to have occurred when approximately 50% of the film surface was covered by water drops.

The duration of the antidripping effect in the A and B series, both according to the invention, was 80 to 125 days, depending on the type of mineral load and the surfactant agent package. No difference was detected between the homologous samples of the A and B series. However, the duration of the antidripping effect in the R series samples, representing the state of the art film, was only 40 to 60 days, i.e. approximately half.

### Example No. 3

Two antidripping films based on low density polyethylene were fabricated, both containing the following formulation: 1% diatomaceous earth, 3% sorbitol monoestearate and 1.1% of other antioxidizing additives and UV stabilizers.

Film A was fabricated by previous adsorption of the surfactant agent in the mineral load, as in the procedure in the A series of Example No. 2.

Reference film R was fabricated as follows: In a first step, all the components were mixed in a double spindle extruding machine, save for the surfactant agent. The surfactant agent was added to the first compound in the course of a second step. Adsorption of the surfactant agent by the mineral load was thus avoided, since the load was covered by the polyethylene in the fist step.

A 180 micron film was fabricated, duration of its antidripping effect being established per the procedure in Example 2. The results were 95 days for sample A versus only 50 days for sample B. This example reveals that the increase in duration of the antidripping effect is a result of a phenomenon whereby the surfactant agent is adsorbed by the microporous mineral load, thus confirming the main claim in the present specification.

### Example No. 4

Example No. 4 is similar to Example No. 3, save for the single difference that both samples, namely the AT sample of the present invention and the RT state of the art reference sample, are thermic films, implying that the mineral load is a natural silicate, as claimed in the above patent ES-439.227, with a 5% concentration and with characteristics within the average size and microporosity values defined in the present specification. The remaining components were all the same in regard to type and concentration. The AT and RT samples were fabricated in identical manner as the A and R samples in Example No. 3.

The 180 micron film was fabricated from both samples, and the duration of the antidripping effect was established via the procedure in Example No. 2. The results were 135 days for sample AT versus only 53 days for sample RT. This example reveals also that the increase in duration of the antidripping effect is a result of the phenomenon whereby the surfactant agent is adsorbed by the microporous mineral load, thus confirming once again the main claim in the present specification.

### Example No. 5

The films A and R from Example 1 were used as greenhouse covers in the province of Almeria (southeastern Spain), for the purpose of analyzing their on-site response. The time elapsed until the issue of this specification has been 6 months, during which period response in regard to antidripping feature has proved as expected. In film A, the water condenses and forms a continuous layer which drains over the surface of the film down to the edge of the greenhouse, whereas in film R the condensation forms spherical drops which fall in rain fashion over the plants.

Light transmission was measured for both films per the procedure described in Example No. 1, both in dry condition, that is to say without condensed water, and in wet condition, with water condensed in the form that corresponds to each film. In dry condition, transmittance was 75% for film A, versus 79% for film R. This slight difference in favor of reference film R is owed to the fact that dust accumulation over the surface of antidripping film A is greater than over the surface of film R. Transmittance with condensed water, which is the prevailing condition inside a greenhouse, was 76% for the antidripping film A, according to the present invention, versus only 59% for reference film R.

This example shows that the antidripping films of the present invention maintain, in their main application as greenhouse covers, a greater light transmission level than the non-antidripping films, despite their tendency to accumulate more dust on their surface. It is therefore important that the antidripping effect is maintained throughout the service life of the film, as in the case of the present invention.

### Example No. 6

Light transmittance is a fundamental feature of greenhouse covers. Processes are available in the state of the art which reduce accumulated dust retention over the external surface of the greenhouse cover, thereby improving light transmission. The purpose is to fabricate multilayer films, normally by extrusion, in a way that the nature of the external layer facing the sky reduces the accumulation of dust. Normally, the surfactant agents used for the antidripping function tend to retain the accumulated dust. In the case of antidust films fabricated by coextrusion, the outer layer of the multilayered film facing inwards into the greenhouse may be an antidripping layer, although the duration of its antidripping effect is even shorter as a result of this being a very thin layer. This problem is solved through the present invention, as shown by this example.

A thin antidripping AF film sample according to the present invention, only microns thick, was fabricated by the technique involving the previous adsorption of the surfactant agent in the microporous mineral load, followed by composition, mixing and actual fabrication of the film. The composition of this AF film was as follows: 5% EVA copolymer, 90.0% vinyl acetate, 2% amorphous silica, 6% sorbitol monoestearate, and 1.1% of other antioxidizing additives and UV stabilizers.

The duration of the antidripping effect of this 50-micron thick film was established by the procedure in Example No. 2, which revealed a value of 104 days, approximately midway between the interval of the A and B series films of Example No. 2, all of them having a thickness of 180 microns.

This example shows that long duration antidripping films according to the present invention can be fabricated with a low accumulated dust retention feature provided an external layer oriented inwards into the greenhouse is an antidripping layer according to the present invention, such as the one in this example, and that the nature of an external layer oriented skyward is such that it reduces the retention of the accumulated dust.

### Example No. 7

The following experiment was conducted to measure the duration of the antidripping effect in actual practice and in an outdoor environment:

Containers filled with water, simulating a small-size greenhouse, were covered on their upper part with a sample of the film to be analyzed. These micro-greenhouses were exposed outdoors, in the Madrid area, with samples A and R of Example No. 3 and thermic samples AT and RT of Example No. 4. Under these conditions, the sun heated the water through the greenhouse effect, producing a condensation that was more intense than the one normally present in actual greenhouses, since no ventilation was available - as in the case of an actual greenhouse - to reduce the internal relative humidity.

The duration of the antidripping effect was 10 months for the R sample and 6 months for the RT sample, both representing the state of the art, versus more than 18 months for the A and AT samples according to the present invention. It may be said that the duration of the antidripping effect in an actual greenhouse is considerably longer.

This example shows that the duration of the antidripping effect on the films of the present invention lasts for at least two farming cycles, which is the estimated service life of standard and thermic films in the Spanish southwestern region, a duration which cannot presently be achieved with state of the art films.

These examples reflect, in the first place, the importance of the antidripping effect on films used for greenhouse covers, both from the viewpoint of light transmission, a feature scarcely known by the farmer, and the commonly known and popular effect of preventing rain in the greenhouse, with the corresponding benefit to the plants. These positive effects on the plants more than justify the requirement calling for the antidripping effect to last as much as the service life of the film, as achieved through the present invention and shown by the above examples. They also reveal that reduced thickness films with long duration antidripping effect can be obtained and applied in the form of one of the extruded layers to antidust films. They further reveal that the present invention is applicable to both standard and thermic films. Finally, they provide irrefutable proof that the increase in duration of the antidripping effect is owed to the adsorption of the surfactant agent by a microporous mineral load, with a subsequent slow dosage of said agent, as defined in the principal claim of the present invention.

The nature of the invention and the manner in which it is put into practice being thus sufficiently described, it should be stated that the above descriptions are liable to modifications in their details provided the fundamental principle is not altered.

## Claims

1. Special films with long duration antidripping properties and a thickness in the order of 50 to 200 microns, used mainly for greenhouse and cultivation tunnel covers, characteristic in that the raw material used is a compound based on polyolefin polymers and copolymers incorporating 0.2% to 8%, preferably 0.5% to 6% by weight of non-ionic surfactant agents absorbed in the micronized and microporous mineral load. The concentration of the mineral load in respect to the surfactant agent is approximately 0.2 to 3 times. The microporous mineral load retains and titrates the surfactant agents in an appropriate amount to provide the film with antidripping properties for an extended period of time.

2. Special films with long duration antidripping effect, according to claim 1, characteristic in that, as polyolefin polymers or copolymers, they use polyethylene, ethylene copolymers and vinyl acetate, ethylene copolymers and butylacrylate, ethylene copolymers and alphaolefins, etc., or mixtures thereof in any proportion, with the single condition that films may be fabricated through a blown tubular extrusion process, approximately 50 to 200 microns thick and with physical-chemical properties adapted to the intended application.

3. Special films with long duration antidripping effect, according to claim 1, characteristic in that, as surfactant agents, they use agents within the chemical species generically defined as polyalcohol fatty acid esters, maintaining one or several non-sterified 'alcohol' or oxialkylenated functional groups, wherein one or several hydrogens in the alkydic chain may be replaced by halogens. Representative examples include sorbitol stearate (mono, di and triester), glycerol stearate or distearate, oxiethylenated ethylene glycol palmitate, sorbitol fluorinated monostearate, etc., and mixtures thereof in any proportion.

4. Special films with long duration antidripping effect, according to claim 1, characteristic in that, as micronized and microporous mineral loads, they use those of a natural or synthetic origin having an average particle size of approximately 1 to 10 microns, a specific surface of approximately 2 to 500 m²/g, and a pore volume, measured by adsorption in heptane, of approximately 0.2 to 5 cm³/g. The nature of the above elements may be amorphous silica, diatomaceaus earth, kaolin, natural silicates, zeolite, hydrotalcite, anhydrous or hydrated alumina, sepiolite, etc., among others.

5. Special films with long duration antidripping effect, according to claim 1, characteristic in that the process of adsorbing the surfactant agent by the microporous mineral load may be conducted by the following methods, among others:
- Previously mixing the surfactant agent with the mineral load, at a temperature such that the surfactant agent is in the liquid state. This premixture is preferably done in a Henschel-type mixing equipment fitted with high speed stirring blades. This premixture is then mixed with the polyolefin, in melted condition, in a high speed shearing equipment of the type used in the plastics industry. This mixture can be implemented in one or two stages, according to the manufacturing technique used for the pre-concentrate, which is then diluted by adding polyolefin to an adequate concentration. The film is finally fabricated with this previously mixed compound preferably by means of a process known as blown tubular extrusion.
- Dissolving the surfactant agent in an adequate solvent such as chloroform, methanol, etc., introducing this solution in the microporous mineral load, and finally heating the mixture to remove the residual solvent. The mixing with the polyolefin, as well as the fabrication of the film, is done according to the same process used in the preceding case.
- Directly, by mixing in its molten state with the polyolefin, as in the process followed in the preceding cases, in order to mix the premixture with the surfactant agent absorbed in the mineral load with the polyolefin, although in this case adding both products simultaneously without pre-mixing them. To proceed in this manner, it is necessary for the surfactant agent in liquid state to be in contact with the microporous mineral load before the polyolefin melts, so that adsorption can take place before the molten polyolefin covers the pores of the mineral load, which would annul its adsorption power. This can be done in one single operation in view that the surfactant agent is in liquid state at ambient temperature, or else melts at temperatures much lower than that of the polyolefin, adsorption thus taking place immediately before the mixing of both components with the polyolefin. The concentration and subsequent diluting process can also be used in this case.

6. Special films with long duration antidripping effect, according to claims 1 to 5, characteristic in that the films may be of a standard or thermic type, the latter being fabricated with a high concentration mineral load which absorbs medium and high infrared radiation. In this case, the microporous thermic effect mineral load must be selected according to claim 4, although preferably tending toward low porosity within the recommended range, and with a load/surfactant agent ratio equal to or higher than 1.

7. Special films with long duration antidripping effect, according to claims 1 to 6, characteristic in that the films may be single or multilayer films, the latter being fabricated for instance by laminating them with adhesives, or preferably by coextrusion, in a way that at least the external layer facing inwards into the greenhouse, on which condensation takes place, is of a nature according to the present invention, with a thickness of no less than approximately 50 microns. Long duration antidripping films can thus be obtained that have a high transparency feature throughout their service life, provided the external layer facing skyward is free of additives which accumulate and retain dust, thereby reducing light transmission.

8. Special films with long duration antidripping effect, according to claims 1 to 7, characteristic in that the films may contain other additives known in the state of the art and normally used in polyolefin film production, such as antioxidants, antistatic agents, pigments and coloring agents, ultraviolet light stabilizers, etc.
